# EUROPÄISCHE PATENTSCHRIFT

(11) **EP 2 828 210 B1**
(45) Veröffentlichungstag und Bekanntmachung des Hinweises auf die Patenterteilung: **02.12.2015**
(21) Anmeldenummer: 13712193.5
(22) Anmeldetag: 20.03.2013
(51) Int. Cl.: C02F 3/12, B01F 7/00, B01F 7/06, B01F 5/10, B01F 3/04

(54) **ANORDNUNG UND VERFAHREN ZUM ERZEUGEN EINER STRÖMUNG IN EINEM ABWASSERBEHANDLUNGSBECKEN**
ARRANGEMENT AND METHOD FOR PRODUCING A FLOW IN A WASTEWATER TREATMENT TANK
SYSTÈME ET PROCÉDÉ POUR GÉNÉRER UN COURANT DANS UN BASSIN DE TRAITEMENT D'EAUX USÉES

(30) Priorität: 23.03.2012 DE 102012204724
(43) Veröffentlichungstag der Anmeldung: 28.01.2015
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2013/055841
(87) Internationale Veröffentlichungsnummer: WO 2013/139863

(56) Entgegenhaltungen:
- EP-A2- 0 107 406
- DE-A1- 3 420 094
- US-A- 3 123 652
- US-B1- 6 231 268

## Beschreibung

Die Erfindung betrifft eine Anordnung sowie ein Verfahren zum Erzeugen einer Strömung in einem Abwasserbehandlungsbecken nach dem Oberbegriff der Ansprüche 1 und 4.

Eine solche Anordnung bzw. ein solches Verfahren ist beispielsweise aus der FR 1 494 983, der DE-OS 1 932 640 oder der DE-OS 2 147 080 bekannt. Dabei ist in einem ringartig ausgestalteten Abwasserbehandlungsbecken ein Horizontalrührwerk zur Erzeugung einer umlaufenden Strömung vorgesehen. Das Horizontalrührwerk weist einen über eine Propellerwelle angetriebenen Propeller auf. Eine Achse der Propellerwelle verläuft parallel zu einem horizontalen Boden des Abwasserbehandlungsbeckens. - Die Propellerwelle wird üblicherweise mittels eines Elektromotors angetrieben. Zur Erzeugung der umlaufenden Strömung sowie zu deren Aufrechterhaltung ist elektrische Energie erforderlich.

Die US 2008/0053898 A1 offenbart ein Verfahren zur Behandlung von Abwasser. Dabei ist zur Erzeugung einer Strömung ein Rührwerk vorgesehen, bei dem die Achse der Propellerwelle bezüglich des Bodens des Abwasserbehandlungsbeckens geneigt ist. Die Richtung der Neigung der Achse entspricht einer mit dem Rührwerk erzeugten Stromrichtung. Die Achse der Propellerwelle ist hier in einem Winkel von etwa 45° zum Boden hin geneigt. Mit dem Propeller wird eine Strömung erzeugt, deren Stromrichtung ebenfalls in einem Winkel von etwa 45° zum Boden hin geneigt ist. - Das bekannte Rührwerk ist an einem Floß befestigt. Es befindet sich in der Nähe einer Oberfläche des Abwassers und dient dem Eintrag von Sauerstoff in das Abwasser.

Die EP 0 107 406 A2 beschreibt die Erzeugung einer Strömung in einem Abwasserbehandlungsbecken mit Hilfe eines Horizontalrührwerks, bei dem die Achse der Propellerwelle bezüglich des Bodens um einen Winkel geneigt werden kann.

Aufgabe der Erfindung ist es, die Nachteile nach dem Stand der Technik zu beseitigen. Es sollen insbesondere eine Anordnung sowie ein Verfahren angegeben werden, welche die Erzeugung einer Strömung in einem Abwasserbehandlungsbecken mit einem verringerten Energieaufwand ermöglichen.

Diese Aufgabe wird durch die Merkmale der Ansprüche 1 und 4 gelöst. Zweckmäßige Ausgestaltungen der Erfindung ergeben sich aus den Merkmalen der Ansprüche 2, 3, 5 und 6 .

Nach Maßgabe der Erfindung wird vorgeschlagen, dass die Achse der Propellerwelle bezüglich des Bodens um einen Winkel von 3 bis 5° geneigt, derart, dass mit dem Horizontalrührwerk eine in Richtung einer Oberfläche des Abwassers gerichtete Strömung erzeugbar ist.

In Abkehr vom Stand der Technik wird erfindungsgemäß mit dem Horizontalrührwerk also eine Strömung erzeugt, deren Stromrichtung nicht zum Boden, sondern in einem flachen Winkel von 3 bis 5° zur Oberfläche des Abwassers hin weist. Mit dieser besonders einfachen und kostengünstigen Maßnahme kann bis zu 10% der für die Erzeugung und Aufrechterhaltung einer Strömung in einem Abwasserbehandlungsbecken erforderlichen Energie eingespart werden.

Erfindungsgemäß handelt es sich bei dem Abwasserbehandlungsbecken um ein Umlaufbecken, wobei mit dem Horizontalrührwerk eine umlaufende Strömung erzeugt wird. Ein Umlaufbecken weist einen umlaufenden Kanal auf. Das Horizontalrührwerk kann auf dem Boden des Abwasserbehandlungsbeckens abgestützt sein. Es kann aber auch an einer das Abwasserbehandlungsbecken oder den Kanal überspannenden Brücke oder dgl. hängend angebracht sein.

Nach einer weiteren vorteilhaften Ausgestaltung der Erfindung ist auf dem Boden eine Belüftungseinrichtung zum Belüften des Abwassers vorgesehen. Es kann sich dabei um herkömmliche Tellerbelüfter, perforierte Schläuche oder dgl. handeln. Die Belüftungseinrichtung ist zweckmäßigerweise stromabwärts des Horizontalrührwerks vorgesehen. Damit kann eine besonders intensive Durchmischung des Abwassers mit der durch die Belüftungseinrichtung zugeführten Luft erreicht werden.

Nach der verfahrensseitigen Maßgabe der Erfindung wird das Horizontalrührwerk so angeordnet, dass die Achse der Propellerwelle bezüglich des Bodens um einen Winkel von 3 bis 5° geneigt ist, derart, dass mit dem Horizontalrührwerk eine in Richtung einer Oberfläche des Abwassers gerichtete Strömung erzeugt wird.

Wegen der mit dem Verfahren erzielbaren Vorteile sowie der vorteilhaften Ausgestaltungen wird auf die obigen Ausführungen zur Anordnung verwiesen. Mit dem Verfahren werden dieselben Vorteile erreicht. Die zur Anordnung beschriebenen vorteilhaften Ausgestaltungen bilden in ähnlicher Weise auch vorteilhafte Ausgestaltungen des Verfahrens.

Nach dem verfahrensseitigen Aspekt der Erfindung können mit besonders geringem Aufwand auch herkömmliche Horizontalrührwerke so umgerüstet werden, dass damit Energie zur Erzeugung einer Strömung in einem Abwasserbehandlungsbecken eingespart werden kann. Beispielsweise kann ein auf dem Boden des Abwasserbehandlungsbeckens abgestütztes Horizontalrührwerk durch Unterlegen von Keilen oder anderen geeigneten Unterstützungsmitteln geneigt werden, so dass die Achse der Propellerwelle mit einem Winkel von 3 bis 5° bezüglich des Bodens geneigt ist, so dass eine in Richtung der Abwasseroberfläche weisende Strömung erzeugbar ist. Auch die Achse einer Propellerwelle eines hängend angebrachten Horizontalrührwerks kann gemäß der Erfindung geneigt werden, so dass damit eine vom Boden zur Oberfläche des Abwassers gerichtete Strömung erzeugt wird. Nach einer weiteren vorteilhaften Ausgestaltung des Verfahrens wird mittels des erfindungsgemäß angeordneten Horizontalrührwerks eine umlaufende Strömung mit einer Geschwindigkeit vom 0,25 bis 0,40 m/s, vorzugsweise 0,27 bis 0,37 m/s, erzeugt.

Nachfolgend werden Ausführungsbeispiele der Erfindung anhand der Zeichnungen näher erläutert. Es zeigen:
- Fig. 1: eine Draufsicht auf ein Abwasserbehandlungsbecken,
- Fig. 2: eine schematische Seitenansicht einer ersten Anordnung,
- Fig. 3: eine schematische Ansicht einer zweiten Anordnung und
- Fig. 4: die Leistungsdichte über der Strömungsgeschwindigkeit einer herkömmlichen Anordnung und einer erfindungsgemäßen Anordnung.

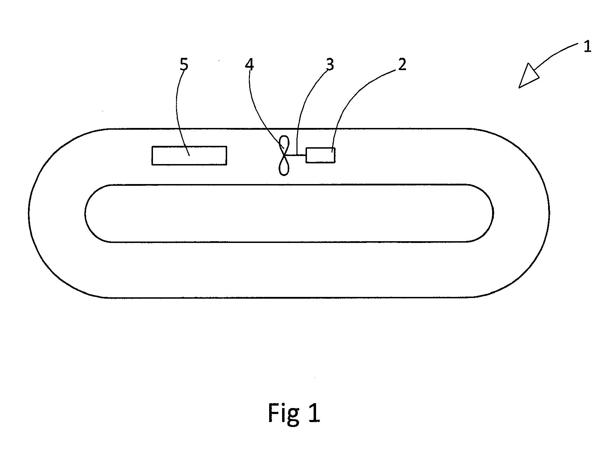

Fig. 1 zeigt eine Draufsicht auf ein allgemein mit dem Bezugszeichen 1 bezeichnetes Abwasserbehandlungsbecken. Es handelt sich dabei um ein durch einen umlaufenden Kanal gebildetes Umlaufbecken. Im Abwasserbehandlungsbecken 1 ist ein Horizontalrührwerk mit einem Motor 2 vorgesehen, von dem sich eine Propellerwelle 3 mit einem daran angebrachten Propeller 4 erstreckt. Mit dem Bezugszeichen 5 ist eine stromabwärts des Horizontalrührwerks vorgesehene Belüftungseinrichtung bezeichnet.

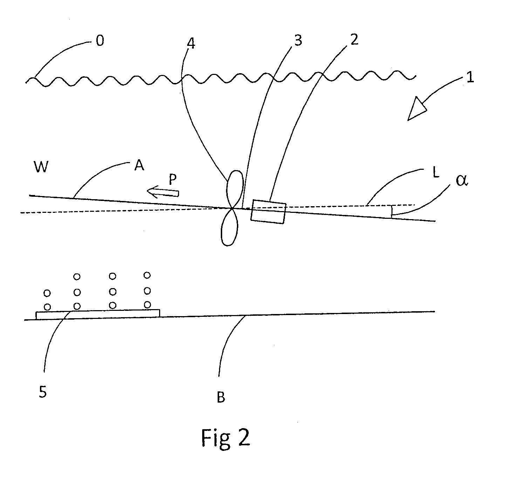

Fig. 2 zeigt eine schematische Seitenansicht einer ersten Anordnung zur Erzeugung einer Strömung im Abwasserbehandlungsbecken 1. Das Abwasserbehandlungsbecken 1 weist einen im Wesentlichen horizontalen Boden B auf. Eine Achse der Propellerwelle 3 ist mit dem Bezugszeichen A bezeichnet. Bei der unterbrochenen Linie L handelt es sich um eine zum Boden B parallel verlaufende Linie. Die Linie L bildet mit der Achse A einen Winkel α von beispielsweise 4°. Mit dem Pfeil P ist eine Stromrichtung einer mit dem Horizontalrührwerk erzeugten Strömung bezeichnet.

Wie aus Fig. 2 ersichtlich ist, weist die Stromrichtung P zu einer Oberfläche O des im Abwasserbehandlungsbecken 1 aufgenommenen Abwassers W. Die Achse A ist entgegensetzt zur Stromrichtung P in Richtung zum Boden B mit dem Winkel α geneigt.

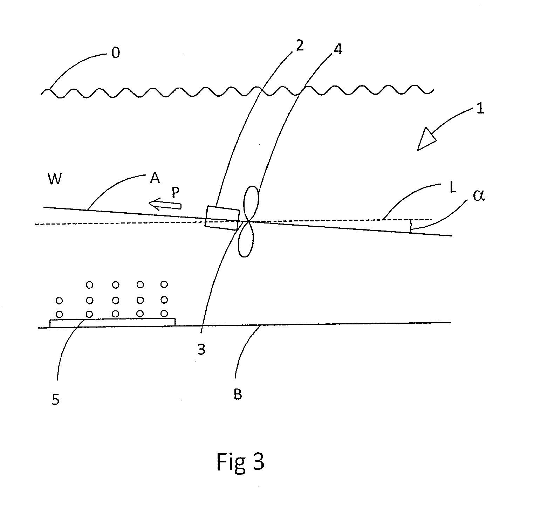

Bei der in Fig. 3 gezeigten weiteren Anordnung ist der Motor 2 stromabwärts des Propellers 4 angeordnet. D. h. der Propeller 4 ist hier so ausgebildet bzw. wird so betrieben, dass damit eine vom Propeller 4 in Richtung des Motors 2 gerichtete Strömung mit der Stromrichtung P erzeugt wird. Auch in diesem Fall ist die Achse A der Propellerwelle 3 im Winkel α gegen den Boden B geneigt. Die Neigung der Achse A verläuft in Richtung des Bodens B entgegensetzt zur Stromrichtung P.

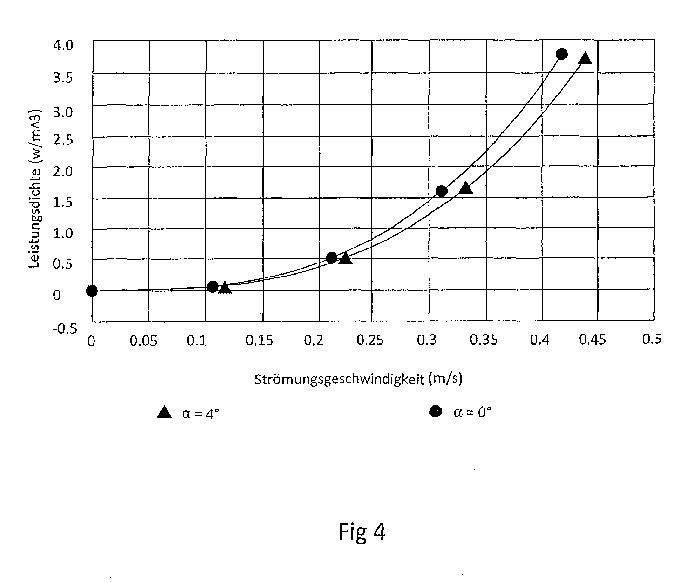

In Fig. 4 ist die Leistungsdichte eines herkömmlichen Horizontalrührwerks (runde Messpunkte) sowie eines erfindungsgemäßen Horizontalrührwerks (dreieckige Messpunkte) jeweils über der damit erzeugten Strömungsgeschwindigkeit aufgetragen. Vorteilhafterweise werden in einem Abwasserbehandlungsbecken, insbesondere einem Umlaufbecken, Strömungsgeschwindigkeiten von 0,30 bis 0,35 m/s erzeugt.

Wie aus Fig. 4 hervorgeht, kann bei einer Neigung der Achse A um einen Winkel α von etwa 4° die Leistungsdichte zur Erzeugung einer Strömungsgeschwindigkeit im Bereich von 0,30 bis 0,35 m/s um etwa 10% vermindert werden. Infolgedessen kann mit der erfindungsgemäßen Anordnung bzw. dem erfindungsgemäßen Verfahren eine Energieersparnis von 10% gegenüber herkömmlichen Anordnung oder Verfahren erreicht werden.

### Bezugszeichenliste

- 1: Abwasserbehandlungsbecken
- 2: Motor
- 3: Propellerwelle
- 4: Propeller
- 5: Belüftungseinrichtung

- A: Achse
- B: Boden
- L: Linie
- O: Oberfläche
- P: Stromrichtung
- W: Abwasser
- α: Winkel

## Patentansprüche

1. Anordnung zum Erzeugen einer Strömung in einem Abwasserbehandlungsbecken (1) mit einem im Wesentlichen horizontalen Boden (B) und einem im Abwasserbehandlungsbecken (1) vorgesehenen Horizontalrührwerk (2, 3, 4) mit einem mittels eines Motors (2) über eine Propellerwelle (3) angetriebenen Propeller (4),
**dadurch gekennzeichnet, dass**
das Abwasserbehandlungsbecken (1) ein durch einen umlaufenden Kanal gebildetes Umlaufbecken ist und mit dem Horizontalrührwerk (2, 3, 4) eine umlaufende Strömung erzeugt wird, wobei die Achse (A) der Propellerwelle (3) bezüglich des Bodens (B) um einen Winkel α von 3 bis 5° geneigt ist, derart, dass mit dem Horizontalrührwerk (2, 3, 4) eine Strömung erzeugt wird, welche vom Propeller zum Motor (2) und in Richtung einer Oberfläche (O) des Abwassers (W) gerichtet ist.

2. Anordnung nach Anspruch 1, wobei auf dem Boden (B) eine Belüftungseinrichtung (5) zum Belüften des Abwassers (W) vorgesehen ist.

3. Anordnung nach einem der vorhergehenden Ansprüche, wobei die Belüftungseinrichtung (5) stromabwärts des Horizontalrührwerks (2, 3, 4) vorgesehen ist.

4. Verfahren zum Erzeugen einer Strömung in einem Abwasserbehandlungsbecken (1) mit einem im Wesentlichen horizontalen Boden (B) und mit einem im Abwasserbehandlungsbecken (1) vorgesehenen Horizontalrührwerk (2, 3, 4), welches einen mittels eines Motors (2) über eine Propellerwelle (3) angetriebenen Propeller (4) aufweist,
**dadurch gekennzeichnet, dass**
als Abwasserbehandlungsbecken (1) ein durch einen umlaufenden Kanal gebildetes Umlaufbecken ist und mit dem Horizontalrührwerk (2, 3, 4) eine umlaufende Strömung erzeugt wird, wobei das Horizontalrührwerk (2, 3, 4) so angeordnet wird, dass die Achse (A) der Propellerwelle (3) bezüglich des Bodens (B) um einen Winkel α von 3 bis 5° geneigt ist, derart, dass mit dem Horizontalrührwerk (2, 3, 4) eine Strömung erzeugt wird, welche vom Propeller zum Motor (2) und in Richtung einer Oberfläche (O) des Abwassers (W) gerichtet ist.

5. Verfahren nach Anspruch 4, wobei eine umlaufende Strömung mit einer Geschwindigkeit von 0,25 bis 0,40 m/s, vorzugsweise 0,27 bis 0,37 m/s, erzeugt wird.

6. Verfahren nach einem der Ansprüche 4 oder 5, wobei das Abwasser (W) mittels einer auf dem Boden (B) vorgesehenen Belüftungseinrichtung (5) belüftet wird.

## Claims

1. An arrangement for producing a flow in a wastewater treatment tank (1), comprising a substantially horizontal bottom (B) and a horizontal mixer (2, 3, 4), which is provided in the wastewater treatment tank (1) and which has a propeller (4) driven by means of a motor (2) via a propeller shaft (3),
**characterized in that**
the wastewater treatment tank (1) is a circulation basin formed by a circumferential channel and a circulating flow is produced by the horizontal mixer (2, 3, 4), wherein the axis (A) of the propeller shaft (3) is tilted relative to the bottom (B) by an angle α of 3 to 5° in such a way that a flow directed from the propeller to the motor (2) and toward a surface (0) of the wastewater (W) is produced by the horizontal mixer (2, 3, 4).

2. The arrangement according to claim 1, wherein an aeration device (5) for aerating the wastewater (W) is provided on the bottom (B).

3. The arrangement according to any one of the preceding claims, wherein the aeration device (5) is provided downstream of the horizontal mixer (2, 3, 4).

4. A method for producing a flow in a wastewater treatment tank (1), comprising a substantially horizontal bottom (B) and a horizontal mixer (2, 3, 4), which is provided in the wastewater treatment tank (1) and which has a propeller (4) driven by means of a motor (2) via a propeller shaft (3), **characterized in that**
the wastewater treatment tank (1) is a circulation basin formed by a circumferential channel and a circulating flow is produced by the horizontal mixer (2, 3, 4), wherein the horizontal mixer (2, 3, 4) is arranged such that the axis (A) of the propeller shaft (3) is tilted relative to the bottom (B) by an angle α of 3 to 5° in such a way that a flow directed from the propeller to the motor (2) and toward a surface (0) of the wastewater (W) is produced by the horizontal mixer (2, 3, 4).

5. The method according to claim 4, wherein a circulating flow having a velocity of 0.25 to 0.40 m/s, preferably 0.27 to 0.37 m/s is produced.

6. The method according to one of the claims 4 or 5, wherein the wastewater (W) is aerated by means of an aeration device (5) provided on the bottom (B).

## Revendications

1. Système pour générer un courant dans un bassin de traitement d'eaux usées (1) comprenant un fond (B) pratiquement horizontal et un agitateur horizontal (2, 3, 4) prévu dans le bassin de traitement d'eaux usées (1) et pourvu d'une hélice (4) entraînée par un moteur (2) par l'intermédiaire d'un arbre d'hélice (3),
**caractérisé en ce que**
le bassin de traitement d'eaux usées (1) est un bassin de circulation formé par un canal périphérique et un courant circulant est généré avec l'agitateur horizontal (2, 3, 4), **en ce que** l'axe (A) de l'arbre d'hélice (3) est incliné à un angle α de 3 à 5° par rapport au fond (B) de façon à ce qu'un courant soit généré avec l'agitateur horizontal (2, 3, 4), ledit courant étant orienté de l'hélice vers le moteur (2) et en direction d'une surface (O) des eaux usées (W).

2. Système selon la revendication 1, en ce qu'un dispositif d'aération (5) est prévu sur le fond (B) pour l'aération des eaux usées (W).

3. Système selon l'une des revendications précédentes, en ce que le dispositif d'aération (5) est prévu en aval de l'agitateur horizontal (2, 3, 4).

4. Procédé pour générer un courant dans un bassin de traitement d'eaux usées (1) comprenant un fond (B) pratiquement horizontal et un agitateur horizontal (2, 3, 4) prévu dans le bassin de traitement d'eaux usées (1), ledit agitateur horizontal présentant une hélice (4) entraînée par un moteur (2) par l'intermédiaire d'un arbre d'hélice (3),
**caractérisé en ce qu'**
un bassin de circulation formé par un canal périphérique sert de bassin de traitement d'eaux usées (1) et génère un courant circulant avec l'agitateur horizontal (2, 3, 4), **en ce que** l'agitateur horizontal (2, 3, 4) est disposé de façon à ce que l'axe (A) de l'arbre d'hélice (3) soit incliné à un angle α de 3 à 5° par rapport au fond (B) et est tel qu'un courant soit généré avec l'agitateur horizontal (2, 3, 4), ledit courant étant orienté de l'hélice vers le moteur (2) et en direction d'une surface (O) des eaux usées (W).

5. Procédé selon la revendication 4, en ce qu'un courant circulant est généré à une vitesse comprise entre 0,25 et 0,40 m/s, de préférence comprise entre 0,27 et 0,37 m/s.

6. Procédé selon l'une des revendications 4 ou 5, en ce que les eaux usées (W) sont aérées au moyen d'un dispositif d'aération (5) prévu sur le fond (B).
